(19) Europäisches Patentamt

European Patent Office

Office européen des brevets

(11) **EP 0 931 961 B1**

(12) **EUROPÄISCHE PATENTSCHRIFT**

(45) Veröffentlichungstag und Bekanntmachung des Hinweises auf die Patenterteilung:
**05.06.2002 Patentblatt 2002/23**

(51) Int Cl.$^7$: **F16H 61/06**, F16D 48/08

(21) Anmeldenummer: **99100489.6**

(22) Anmeldetag: **12.01.1999**

(54) **Eichverfahren für Steuerkupplungen eines Getriebes**

Calibration method for transmission control clutches

Procédé de calibration d'étalonnage pour commande d'embrayage de transmissions

(84) Benannte Vertragsstaaten:
**DE FR GB IT**

(30) Priorität: **15.01.1998 US 7592**

(43) Veröffentlichungstag der Anmeldung:
**28.07.1999 Patentblatt 1999/30**

(73) Patentinhaber: **DEERE & COMPANY**
**Moline, Illinois 61265-8098 (US)**

(72) Erfinder: **Eastman, Briton Todd**
**Coffeyville, Kansas 67337 (US)**

(74) Vertreter: **Lau-Loskill, Philipp, Dipl.-Phys. et al**
**Deere & Company,**
**European Office,**
**Patent Department**
**68140 Mannheim (DE)**

(56) Entgegenhaltungen:
**EP-A- 0 783 080         EP-A- 0 859 171**
**US-A- 5 224 577         US-A- 5 737 979**

**Beschreibung**

Die Erfindung betrifft ein Verfahren zum Eichen von Steuerkupplungen eines Getriebes, wobei das Getriebe eine mit einem Motor verbundene Eingangswelle, eine Ausgangswelle und mehrere Steuerkupplungen aufweist, die jede ein Drehmomente empfangendes Eingangselement und ein Ausgangselement aufweisen. Durch das Eichverfahren sollen Schlüsselparameter, die sich auf den Betrieb und die Steuerung der Steuerkupplungen beziehen, bestimmt werden.

Es wurden bereits elektrohydraulische Getriebesteuerungen angewendet, die proportional angesteuerte Ventile enthalten. In derartigen Systemen mit proportional gesteuerten Ventilen ist es möglich und wünschenswert, das Drehmoment der Kupplungen während deren Eingriffsphase genau zu steuern. Während die elektrischen Steuersignale, die an die Steuerventile angelegt werden, sehr genau einstellbar sind, verursachen die Fertigungstoleranzen der Ventile und des Getriebes erhebliche Abweichungen zwischen verschiedenen konkreten Fahrzeugen. Wenn es bekannt wäre, welches elektrische Steuersignal mit einem anfänglichen Kupplungseingriffsdruck, bei dem die Kupplung gerade beginnt, ein Drehmoment zu übertragen, korrespondiert, dann könnte dieses Steuersignal verwendet werden, um während einer Getriebeumschaltung die Umschaltanforderung für die Kupplung derart zu modifizieren, daß sich eine optimierte Steuerung ergibt.

Beispielsweise offenbart die US-A-4,855,913, daß die Schlüsselparameter des Steuersystems den anfänglichen Kupplungseingriffsdruck (bezeichnet mit DC-MAX) und die Schnellfüllkupplungsverzögerung (bezeichnet als T1) einschließen. Es wird desweiteren dargelegt, daß DC-MAX und T1 durch Labor- oder Feldtests bestimmt werden müssen. Ein konkretes Verfahren zur Bestimmung dieser Werte wird jedoch nicht angegeben.

Die US-A-4,989,471 beschreibt für eine Getriebesteueranordnung auf Mikroprozessorbasis ein Eichverfahren oder eine Methode zur Ermittlung des Drucks, der erforderlich ist, um einen Kupplungseingriff zu erzielen. Bei dem Verfahren wird die Getriebeausgangswelle abgebremst, dann der Kupplungsdruck stufenweise erhöht und ein Meßwert gesichert, der einem Kupplungsdruck entspricht, bei dem die Motordrehzahl abzunehmen beginnt. Dieses Verfahren stützt sich jedoch auf den Drehwiderstand, der sich aufgrund einer Betätigung der Betriebsbremsen zur Verhinderung der Drehung der Getriebeausgangswelle ergibt. Wenn die Fahrzeugbremsen nicht betätigt werden oder wenn sie versagen, kann solch ein Verfahren gefährlich sein, weil sich dann das Fahrzeug während des Eichens unerwartet bewegen kann.

Die US-A-4,989,471 beschreibt auch ein alternatives Eichverfahren für eine Kupplung, bei dem erfaßt wird, wann die Kupplung genügend Drehmoment überträgt, um das Fahrzeug zu bewegen. Dieses alternative Verfahren erfordert es, daß das Fahrzeug zum Eichen an einen Ort gebracht wird, an dem keine Sicherheitsbedenken wegen einer Fahrzeugbewegung bestehen. Das von einem derartigen Verfahren abgeleitete Ergebnis hängt von den Eigenschaften des Untergrunds, auf dem das Fahrzeug steht, ab. Das beschriebene Verfahren hängt auch von Schwankungen der erfaßten Motordrehzahl ab und reagiert daher empfindlich auf unterschiedliche Motoren und Motordrehzahlregler.

Die US-A-5,082,097 bezieht sich auf ein Eichsystem oder ein System zur Bestimmung eines Stromsignals, welches einem Wert entspricht, bei dem die Kupplung beginnt ein Drehmoment zu übertragen. Dieses System erfordert es, daß entweder die Fahrzeugbewegung oder der Motordrehzahlabfall erfaßt wird. Es hängt damit von Schwankungen der erfaßten Motordrehzahl ab und reagiert daher empfindlich auf unterschiedliche Motoren und Motordrehzahlregler, oder es erfordert Fahrzeugbewegungen, die gefährlich sein können.

Ein weiteres Eichverfahren wird in der US-A-5,224,577 beschrieben. Dieses Verfahren beinhaltet ebenfalls das Erfassen des Motordrehzahlabfalls und reagiert damit empfindlich auf unterschiedliche Motoren und Motordrehzahlregler.

Ein weiteres Eichverfahren wird durch die US-A-5,337,871 beschrieben. Dieses Verfahren erfordert jedoch Drucksensoren, die teuer und nicht so genau und zuverlässig sind, wie Drehzahlsensoren.

Ein weiteres Eichverfahren wird durch die EP-A-0 859 171 beschrieben. Dieses Dokument kann als nächstliegenden Stand der Technik betrachtet werden und offenbart ein Verfahren, das dem des Anspruchs 1 ähnelt, jedoch ohne den Schritt 6. Bei diesem Verfahren muß eine Zielverzögerungszeit, die verwendet wird, um den Haltedruck zu bestimmen, empirisch als Mittelwert, der auf den Messungen an einer Reihe von Probegetrieben beruht, ermittelt werden. Wenn jedoch der Profilwiderstand des serienmäßigen Getriebes erheblich von dem des Probegetriebes abweicht, kann das Drehmoment, das durch den sich ergebenden Haltedruck der zu eichenden Kupplung erzeugt wird, von dem gewünschten Drehmoment abweichen. Es ist daher wünschenswert, bevor der Haltedruck für jede Kupplung ermittelt wird, für jedes Getriebe Profilwiderstandszeiten zu bestimmen und dies bei der Ermittlung der Zielverzögerungszeiten zu verwenden.

Die der Erfindung zugrunde liegende Aufgabe wird darin gesehen, ein Kalibrierverfahren oder ein Verfahren zur Bestimmung von Schlüsselparametern anzugeben, das für die Steuerung von Proportionalsteuerventilen eines Lastschaltgetriebes verwendet werden kann. Das Verfahren soll nicht durch Abweichungen des Profilwiderstands unterschiedlicher Getriebe beeinflußt werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird die Profilwiderstandszeit gemessen und für die Berechnung der Zielbeschleunigungszeit verwendet, die erforderlich ist, um ein gegebenes Haltedrehmoment zu erzeugen. Anschließend wird der Haltedruck jeder Kupplung bestimmt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

Fig. 1             das schematische Blockdiagramm einer mikroprozessorunterstützten Getriebesteuerung, bei der die vorliegende Erfindung anwendbar ist,

Fig. 2             die schematische Darstellung eines Getriebes, bei dem die vorliegende Erfindung anwendbar ist,

Fig. 3             die Beziehung der Figuren 4A, 4B und 4C zueinander,

Fig. 4A, 4B und 4C      das vereinfachte Logikflußdiagramm, für ein erfindungsgemäßes Haltedruck-Eichverfahren,

Fig. 5             die Beziehung der Figuren 6A, 6B und 6C zueinander und

Fig. 6A, 6B und 6C      das vereinfachte Logikflußdiagramm für ein alternatives erfindungsgemäßes Haltedruck-Eichverfahren,

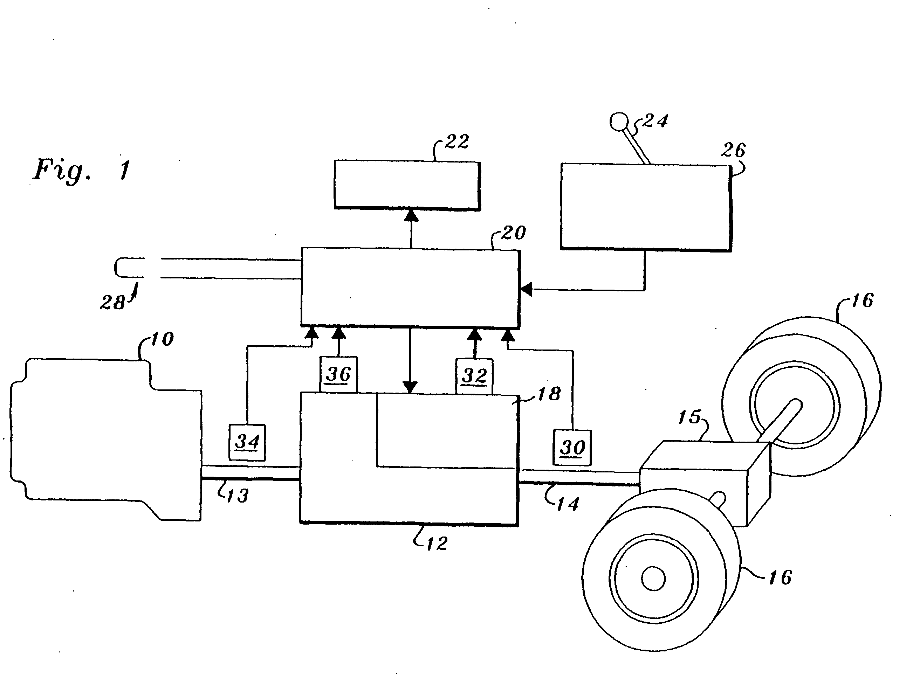

Wie in Fig. 1 gezeigt, enthält ein Fahrzeugantriebsstrang einen Motor 10, welcher über eine Eingangswelle 13 ein Lastschaltgetriebe 12 antreibt, welches seinerseits über eine Ausgangswelle 14 und ein Differential 15 die Räder 16 des Fahrzeugs antreibt. Das Lastschaltgetriebe 12 wird durch einen Satz von elektrohydraulischen Ventilen 18 betätigt, welche durch Signale eines einen Mikroprozessor enthaltenden Getriebesteuergeräts 20 gesteuert werden. Bei dem Getriebe 12 kann es sich beispielsweise um ein Lastschaltgetriebe der Firma Funk Manufacturing, Inc., USA vom Typ DF 150 oder DF 250 handeln. Die Erfindung ist jedoch auch bei anderen Lastschaltgetrieben anwendbar.

Das Getriebesteuergerät 20 steht mit einer Anzeige-Ausgabe (Display) 22 sowie über ein Gangschaltkodiergerät 26 mit einem Gangschalthebel 24 in Verbindung. Bei dem Gangschaltkodiergerät 26 handelt es sich beispielsweise um ein handelsübliches Gerät, wie es von der Firma Funk Manufacturing für seine DF 150 und DF 250 Lastschaltgetriebe verwendet wird. Das Getriebesteuergerät 20 ist desweiteren mit einem elektrischen Überbrückungskabel (Jumper) 28 verbunden. Magnetische Drehzahlsensoren 30, 32, 34 und 36 liefern Drehzahlsignale an das Getriebesteuergerät 20, wie im folgenden näher beschrieben wird.

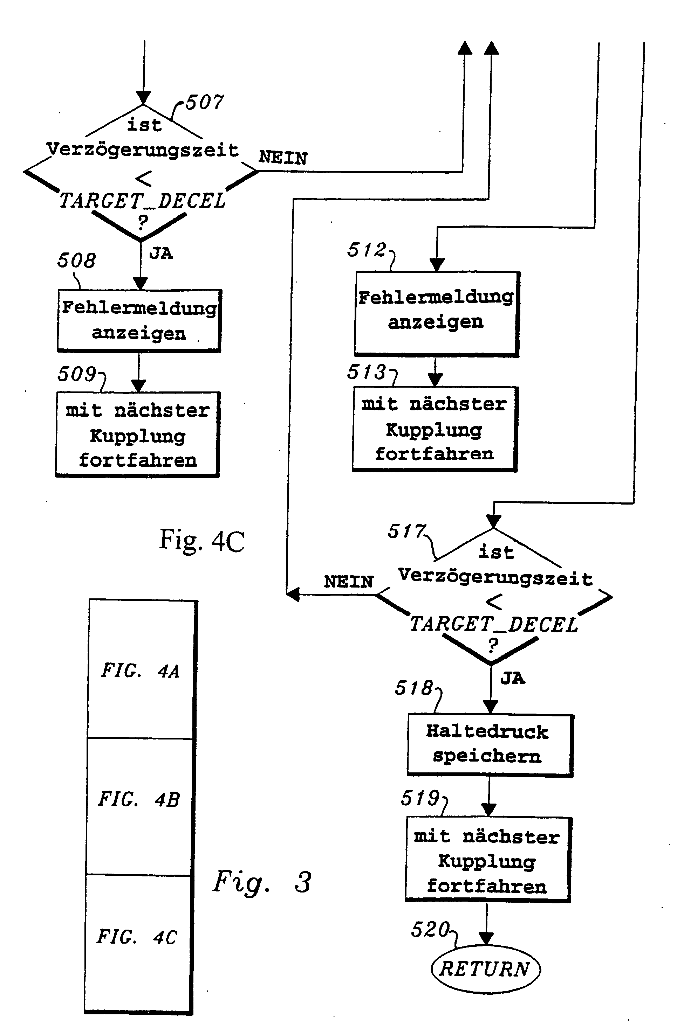

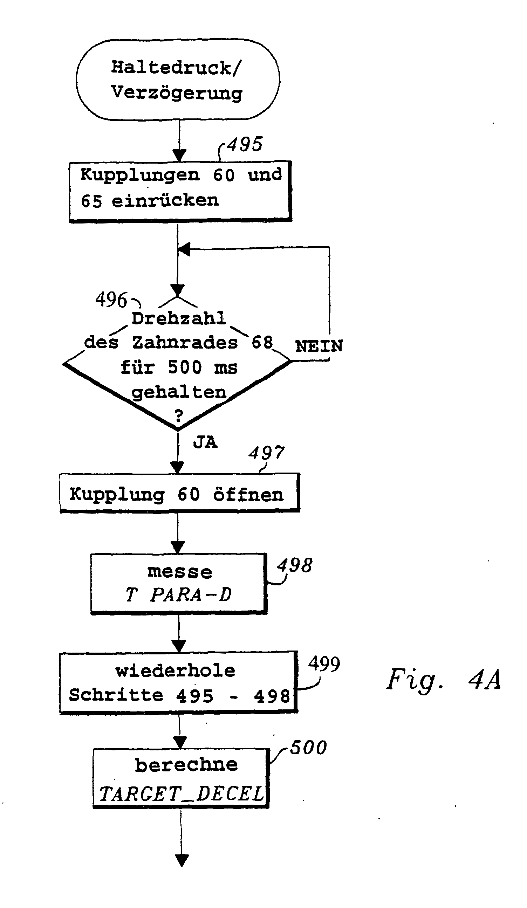

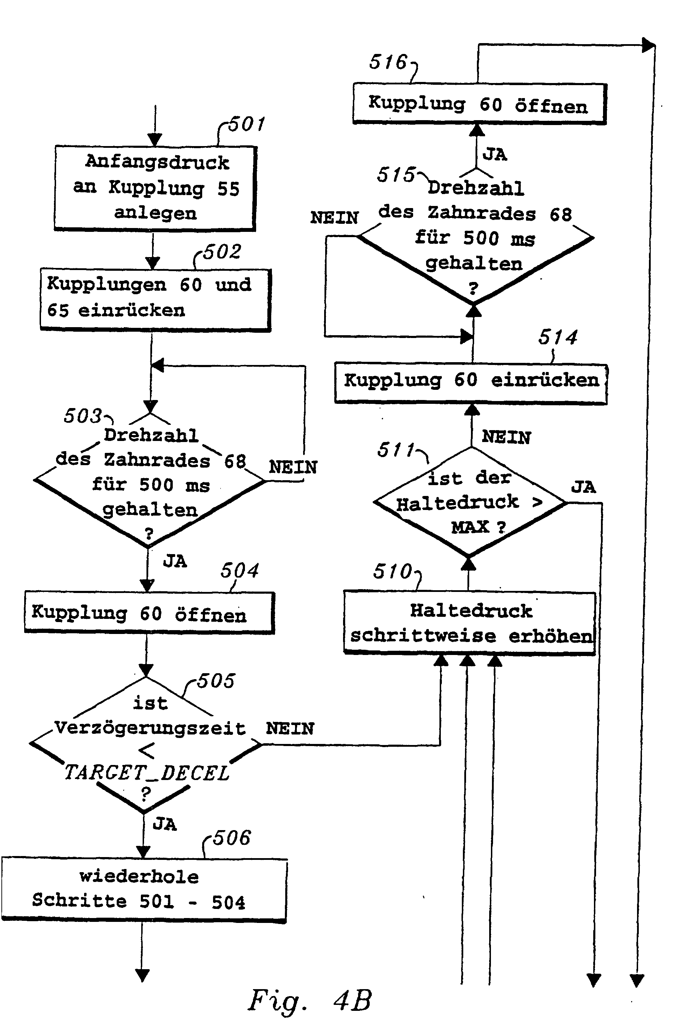

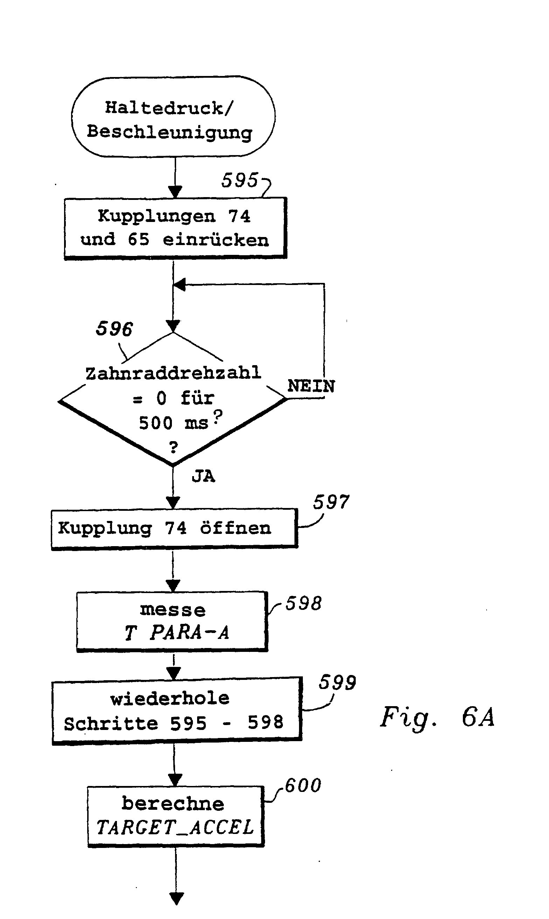

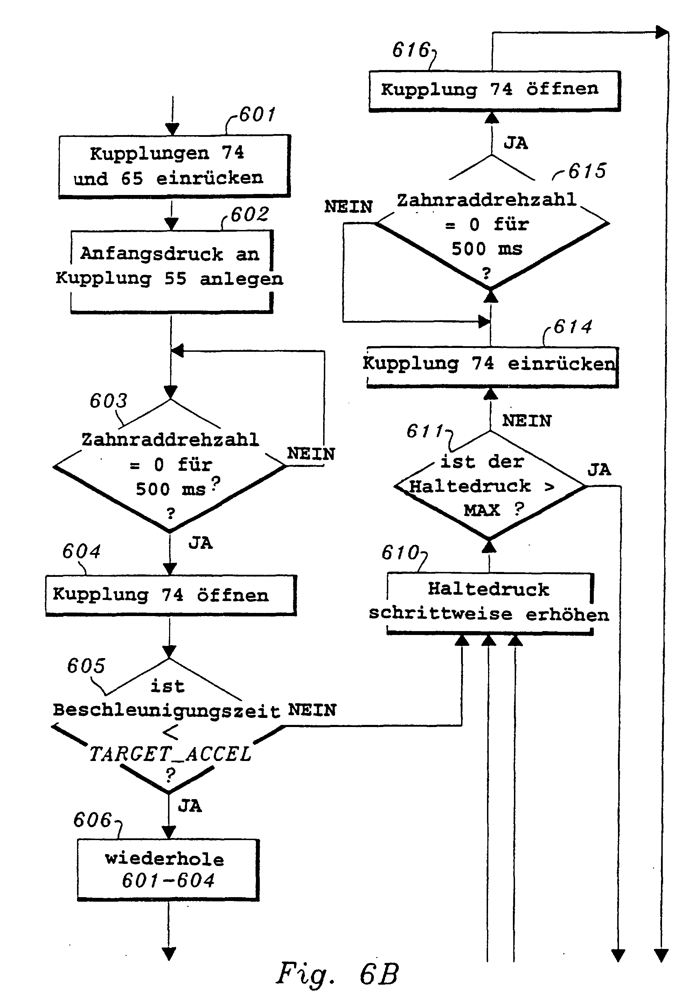

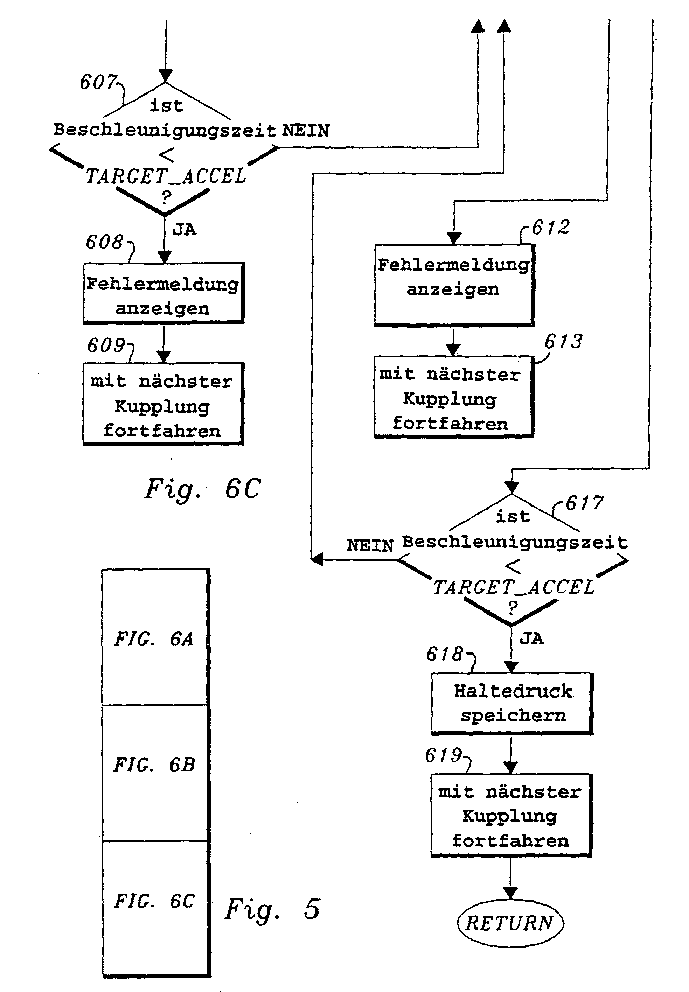

Das Getriebesteuergerät 20 enthält einen nicht näher gezeigten handelsüblichen Mikroprozessor, welcher in Reaktion auf den Jumper 28 ein Computer-Programm ausführt, das ein Eichverfahren, wie nachfolgend beschrieben, durchführt. Das Getriebesteuergerät 20 enthält desweiteren nicht näher gezeigte Ventiltreiber, welche pulsdauermodulierte Spannungssteuersignale mit variabler Einschaltdauer an die Ventile 18 liefert. Das Getriebesteuergerät 20 und die nicht dargestellten Ventiltreiber erzeugen Steuersignale als Funktion verschiedener gemessener sowie durch die Bedienungsperson vorgegebener Eingangsgrößen, um einen gewünschten Kupplungsdruck einzustellen und um dadurch die Umschaltung des Getriebes 12 in gewünschter Weise zu steuern. Die vorliegende Erfindung betrifft jedoch nicht die Umschaltsteuerung des Getriebes 12, das Getriebe 12 selbst oder die Ventile 18, sondern das Eichen bestimmter Parameter. Das erfindungsgemäße Verfahren wird durch das Getriebesteuergerät 20 mittels eines Computer-Programms durchgeführt, welches Programmteile enthält, die mit den in den Figuren 4A, 4B und 4C und den Figuren 6A, 6B und 6C dargestellten Algorithmen in Beziehung stehen. Weitere Informationen zu anderen Aspekten des Computerprogramms können der EP-A-0 859 171 entnommen werden, auf deren Offenbarung hiermit Bezug genommen wird.

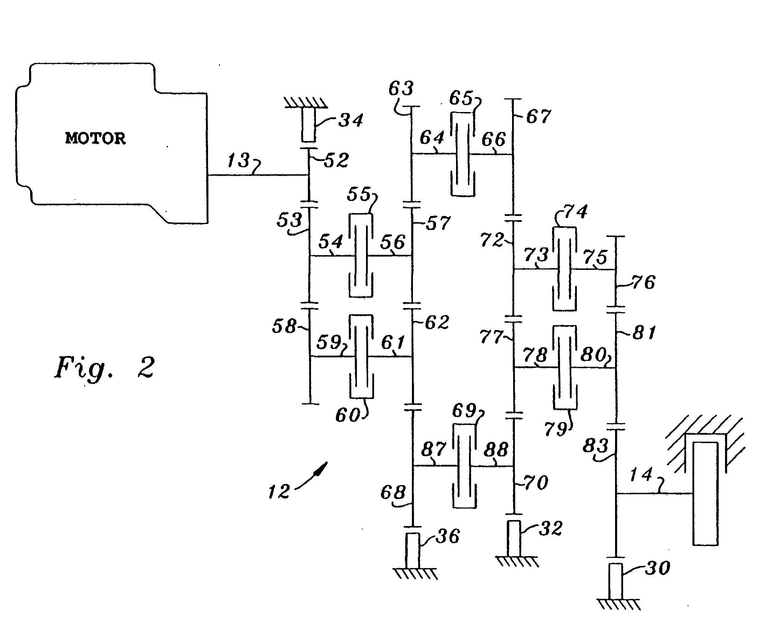

Das in Fig. 2 gezeigte Getriebe hat sechs Kupplungen 55, 60, 65, 69, 74 und 79. Die Eingangswelle 13 ist mit dem Zahnrad 52 verbunden, welches mit den Zahnrädern 53 und 58 in Eingriff steht. Die Wellen 54 und 56 drehen bei gleicher Drehzahl, wenn die Kupplung 55 voll eingerückt ist. Die Wellen 59 und 61 drehen bei gleicher Drehzahl, wenn die Kupplung 60 voll eingerückt ist. Die Wellen 64, 56, 61 und 87 sind mit den Zahnrädern 63, 57, 62 bzw. 68 verbunden. Die Wellen 64 und 66 drehen bei gleicher Drehzahl wenn die Kupplung 65 eingerückt ist. Die Wellen 87 und 88 drehen bei gleicher Drehzahl, wenn die Kupplung 69 eingerückt ist. Die Wellen 73 und 75 drehen bei gleicher Drehzahl, wenn die Kupplung 74 eingerückt ist. Die Wellen 78 und 80 drehen bei gleicher Drehzahl, wenn die Kupplung 79 eingerückt ist. Um Leistung von der Eingangswelle 13 an die Ausgangswelle 14 zu übertragen, müssen drei Kupplungen eingerückt werden: entweder 55 oder 60 und entweder 65 oder 69 sowie entweder 74 oder 79. Die Zahnräder 63, 57, 62, und 68 stehen in dauerndem Eingriff miteinander. Ebenso stehen die Zahnräder 67, 72, 77 und 70 in dauerndem Eingriff miteinander.

Der magnetische Drehzahlsensor 30 überwacht die Ausgangsdrehzahl des Getriebes 12. Der magnetische Drehzahlsensor 32 überwacht die Drehzahl des Zahnrades 70 und liefert auch berechenbare Drehzahlen für die Zahnräder 67, 72 und 77. Der magnetische Drehzahlsensor 34 überwacht die Eingangsdrehzahl des Getriebes 12. Der magnetische Drehzahlsensor 36 überwacht die Drehzahl des Zahnrades 68 und liefert auch berechenbare Drehzahlen für die Zahnräder 62, 57 und 63. Das Zahnrad 76 ist mit der Welle 75 verbunden, und das Zahnrad 81 ist mit der Welle 80 verbunden. Die Zahnräder 76, 81 und 83 stehen miteinander in Eingriff, um Leistung an die Ausgangswelle 14 des Getriebes 12 auszugeben. Die Kupplungen 55, 60, 65, 69, 74 und 79 werden durch hydraulische Drücke, die von den elektrohydraulischen Ventilen 18 geliefert werden, aktiviert (eingerückt).

Eichverfahren

Haltedruck - Verzögerung

Das in den Figuren 3, 4A, 4B und 4C gezeigte Eichverfahren kann verwendet werden, um den Haltdruck für alle Kupplungen zu bestimmen. Das automatische Eichverfahren wird durch das Anschließen des Eich-Jumpers 28 an das Getriebesteuergerät 20 in Betrieb gesetzt. Auch wenn dies in Fig. 3 nicht dargestellt ist, führt das Getriebesteuergerät laufend Überprüfungen durch, um sicherzustellen, daß die nicht gezeigte Parkbremse betätigt ist, daß die Öltemperatur über ca. 20°C (69°F) liegt, daß die Motordrehzahl ungefähr bei 1500 rpm (Umdrehungen pro Minute) liegt und daß keine nennenswerte Ausgangswellendrehzahl feststellbar ist. Wenn durch irgendeine dieser Überwachungen ein Fehler festgestellt wird, wird das Programm abgebrochen. Wenn der Eich-Jumper 28 angeschlossen ist und die Motordrehzahl und die Parkbremse eingestellt sind, wird der Gangschalthebel 24 aus seiner Neutralstellung in seine Vorwärtsposition bewegt, um das Eichverfahren in Gang zu setzen. Tabelle 1 listet die Kupplungskombinationen auf, die zur Bestimmung der Haltedrücke verwendet werden.

Tabelle 1

| Haltedruck - Verzögerung | | | |
|---|---|---|---|
| zu eichende Kupplung | Kupplung Nr. 1 | Kupplung Nr. 2 | Drehzahl des Zahnrades |
| 55 | 60 | 65 | 68 |
| 60 | 55 | 65 | 68 |
| 65 | 55 | 74 | 68 |
| 69 | 55 | 74 | 68 |
| 74 | 55 | 65 | 70 |
| 79 | 55 | 65 | 70 |

Das Eichverfahren wird im folgenden für die Kupplung 55 beschrieben, bei der die Kupplung Nr. 1 die Kupplung 60 ist, die Kupplung Nr. 2 die Kupplung 65 ist und die Drehzahl des Zahnrades 68 durch den magnetischen Drehzahlsensor 36 überwacht wird.

In Schritt 495 werden die Kupplungen 60 und 65 voll eingerückt. Schritt 496 überprüft den Drehzahlsensor 36, um festzustellen, ob während einer Zeitdauer von 500 Millisekunden (ms) das Zahnrad 68 eine korrekte Drehzahl beibehält. Wenn diese Zahnraddrehzahl für 500 ms beibehalten wurde, wird die Kupplung 60 in Schritt 497 geöffnet. Dann bestimmt Schritt 498 den Zeitbetrag Tpara_d, der erforderlich ist, um die Drehgeschwindigkeit des Zahnrades 68 um einen bestimmten Betrag zu verringern. Dieser Betrag entspricht dem Profilwiderstand der einbezogenen Getriebekomponenten. Schritt 499 veranlaßt eine wenigstens dreifache Wiederholung der Schritte 495 - 498 und dann weitere Wiederholungen bis die letzten drei gemessenen Tpara_d-Zeiten weniger als 5 % voneinander abweichen. Schritt 500 berechnet dann unter Verwendung des Mittelwertes der letzten drei Tpara_d Verzögerungszeiten anhand der folgenden Gleichung eine Zielverzögerungszeit (target_decel),

$$target\_decel =$$

$$[low\_rpm - (engine\ cal\_spd - x\_rpm)] /$$

$$[(-Th/I) + (low\_rpm - (engine\ cal\_spd - x\_rpm)) / Tpara\_d].$$

Hierbei ist low_rpm die untere Drehzahlansprechgrenze von ungefähr 200 rpm (Anfangswert, der verwendet wird, weil die Messung sehr kleiner Drehzahlen ungenau ist), die bei der Messung der Verzögerungszeit verwendet wird. engine cal_spd ist ungefähr 1600 rpm, x_rpm ist ungefähr 150 rpm (sowohl engine cal_spd als auch x_rpm sind Einstellwerte, die für den zu eichenden Getriebetyp ausgewählt werden). Th ist das gewünschte Haltedrehmoment der zu eichenden Kupplung. I ist die Trägheit der rotierenden Teile, die der zu eichenden Kupplung nachgeschaltet sind, und wird aus den Wesensmerkmalen des Getriebes berechnet. Tpara_d ist die Profilwiderstandverzögerungszeit die in Schritt 498 ermittelt wurde.

In Schritt 501 wird ein Anfangsdruck von beispielsweise 2,1 bar (30 psi) an die Kupplung 55 angelegt. In Schritt 502 werden die Kupplungen 60 und 65 vollständig eingerückt, was die Drehung sowohl des Eingangs- als auch des Ausgangselements der Kupplung 55 zur Folge hat. Schritt 503 überprüft den Drehzahlsensor 36, um festzustellen, ob während einer Zeitdauer von 500 Millisekunden (ms) das Zahnrad 68 eine korrekte Drehzahl beibehält. Wenn diese Zahnraddrehzahl für 500 ms beibehalten wurde, wird die Kupplung 60 in Schritt 504 geöffnet.

Die Drehzahl der mit dem Zahnrad 68 verbundenen Zahnräder und Wellen beginnt nun wegen des Profilwiderstandes (Reibung) und wegen der nur teilweise eingerückten Kupplung 55 abzufallen. Schritt 505 bestimmt den Zeitbetrag (Verzögerungszeit), der erforderlich ist, damit die Drehzahl des Zahnrades 68 um einen bestimmten Betrag abnimmt. Wird Schritt 505 festgestellt, daß die gemessene Verzögerungszeit kleiner ist als die berechnete und gespeicherte Zielverzögerungszeit (target_decel), dann veranlaßt Schritt 506 eine Wiederholung der Schritte 501 bis 504. In Schritt 507 wird die Verzögerungszeit erneut gemessen und wenn sie immernoch kleiner als die Zielverzögerungszeit target_decel ist, veranlaßt Schritt 508 eine geeignete Fehlermeldung, die auf dem Display 22 erscheint. Schritt 509 veranlaßt das Programm nun, den Haltedruck einer anderen Kupplung zu bestimmen.

Ist in den Schritten 505 bis 507 die gemessene Verzögerungszeit nicht kleiner als target_decel, dann wird das Programm mit Schritt 510 fortgesetzt, welcher den Haltedruck um einen vorgebbaren Maßsprung erhöht. Schritt 511 überprüft dann, ob der angelegte Druck größer als oder gleich einem maximal zulässigen Haltedruck ist. Ist dies der Fall, dann veranlaßt Schritt 512 die Anzeige einer Fehlermeldung, und Schritt 513 veranlaßt das Programm den Haltedruck einer anderen Kupplung zu bestimmen. Andernfalls richtet Schritt 511 das Programm auf Schritt 514, welcher die Kupplung 60 wieder einrückt, so daß der Ausgang der Kupplung 55 (Welle 56 und Zahnrad 57) wieder in eine schnelle Drehzahl versetzt wird. Schritt 515 prüft dann wieder, ob eine bestimmte Zahnraddrehzahl für 500 ms beibehalten wurde, und wenn dies der Fall ist, öffnet Schritt 516 die Kupplung 60. Schritt 517 vergleicht wieder die Verzögerungszeit mit der Zielverzögerungszeit target_decel. Wenn die Verzögerungszeit größer ist, fährt das Programm mit Schritt 510 fort und erhöht den Haltedruck um einen Maßsprung.

Erreicht schließlich der an die Kupplung 55 angelegte Druck den Haltedruckwert, beginnt die Kupplung 55 einzugreifen und ein Drehmoment an die Welle 56 und das Zahnrad 57 zu übertragen, wodurch die Drehzahl des Zahnrades 57 verringert und das Zahnrad 57 veranlaßt wird, sich in eine Richtung zu drehen, die der von dem Eingriff der Kupplung 60 herrührenden Drehrichtung entgegengesetzt ist. Wenn dies geschieht und in Schritt 517 festgestellt wird, daß die gemessene Verzögerungszeit kleiner als die Zielverzögerungszeit target_decel ist, wird durch Schritt 518 der Haltedruck gespeichert. Schritt 519 veranlaßt dann, daß die Schritte 501 bis 518 für andere zu eichende Kupplungen wiederholt werden. Damit wurde der Haltedruck durch Erfassung der Drehzahl einer inneren Getriebekomponente - Zahnrad 68 - bestimmt, ohne den Motordrehzahlabfall zu erfassen und ohne das Fahrzeug in Bewegung zu setzen.

Haltedruck - Beschleunigung

Aus den Figuren 5, 6A, 6B und 6c geht ein alternatives Eichverfahren hervor, bei dem der Haltedruck durch Messung der Beschleunigung einer inneren Komponente des Getriebes 12 bestimmt wird. Bei dem beschriebenen Getriebe 12 läßt sich dieses Verfahren auf alle Kupplungen, außer auf die Kupplungen 74 und 79, anwenden. Tabelle 2 listet die Kupplungskombinationen zur Bestimmung der Haltedrücke für die Kupplungen 55, 60, 65 und 69 auf.

Tabelle 2

| Haltedruck - Beschleunigung | | | |
|---|---|---|---|
| zu eichende Kupplung | Kupplung Nr. 1 | Kupplung Nr. 2 | Drehzahl des Zahnrades |
| 55 | 74 | 65 | 68 |
| 60 | 74 | 65 | 68 |
| 65 | 74 | 55 | 70 |
| 69 | 74 | 55 | 70 |

Anhand der Figuren 6A, 6B und 6C wird nun das Eichverfahren für die Kupplung 55 beschrieben, bei dem die Kupplung Nr. 1 die Kupplung 74 ist, die Kupplung Nr. 2 die Kupplung 65 ist und die Drehzahl des Zahnrades 68 durch den magnetischen Drehzahlsensor 36 überwacht wird.

In Schritt 595 werden die Kupplungen 74 und 65 voll eingerückt. Schritt 596 überprüft den Drehzahlsensor 36, um festzustellen, ob während einer Zeitdauer von 500 Millisekunden (ms) das Zahnrad 68 eine korrekte Drehzahl beibehält. Wenn diese Zahnraddrehzahl für 500 ms beibehalten wurde, wird die Kupplung 74 in Schritt 597 geöffnet. Dann bestimmt Schritt 598 den Zeitbetrag Tpara_a, der erforderlich ist, um die Drehgeschwindigkeit des Zahnrades 68 um einen bestimmten Betrag zu erhöhen. Dieser Betrag entspricht dem Profilwiderstand der einbezogenen Getriebekomponenten. Schritt 599 veranlaßt eine wenigstens dreifache Wiederholung der Schritte 595 - 598 und dann weitere Wiederholungen bis die letzten drei gemessenen Tpara_a-Zeiten weniger als 5 % voneinander abweichen. Schritt 600 berechnet dann unter Verwendung des Mittelwertes der letzten drei Tpara_a Beschleunigungszeiten anhand der folgenden Gleichung eine Zielbeschleunigungszeit (target_accel),

$$\text{target\_accel} =$$

$$[(\text{engine cal\_spd} - \text{x\_rpm}) - \text{low\_rpm}] /$$

$$[(Th/I) + ((\text{engine cal\_spd} - \text{x\_rpm}) - \text{low\_rpm})/Tpara\_a].$$

Hierbei ist Tpara_a die im Schritt 600 ermittelte Profilwiderstandsbeschleunigungszeit. Die anderen Faktoren sind gleich denen im Zusammenhang mit der Gleichung für target_decel beschriebenen.

In Schritt 601 werden die Kupplungen 74 und 65 voll eingerückt, so daß eine Drehung des Ausgangs der Kupplung 55 und des Zahnrades 57 verhindert wird. In Schritt 602 wird ein anfänglicher Haltedruck an die Kupplung 55 angelegt. Schritt 603 überprüft, ob die Drehzahl des Zahnrades 68 für wenigstens 500 ms Null rpm ist. Ist dies der Fall, öffnet Schritt 604 die Kupplung 74 und erlaubt für ein beliebiges durch die Kupplung 55 übertragenes Drehmoment eine Beschleunigung des Zahnrades 68.

Schritt 605 mißt, welche Zeit es bei dem anfänglichen Haltedruck erfordert, um das Zahnrad 68 auf eine vorbestimmte Zieldrehzahl zu beschleunigen. Ist diese Zeit kleiner als eine Zielbeschleunigungszeit target_accel, dann veranlaßt Schritt 606 eine Wiederholung der Schritte 601 bis 604. Schritt 607 mißt die Zeit, die es erfordert, um das Zahnrad 68 auf die vorbestimmte Zieldrehzahl zu beschleunigen. Wenn diese Zeit immernoch kleiner als die Zielbeschleunigungszeit target_accel ist, dann gibt Schritt 608 eine entsprechende Fehlermeldung über das Display 22 aus und das Programm fährt mit Schritt 609 fort, um den Haltedruck der nächsten Kupplung zu bestimmen.

Wenn in den Schritten 605 oder 607 festgestellt wird, daß die Zeit zur Beschleunigung auf die vorbestimmte Drehzahl nicht kleiner ist als die Zielbeschleunigungszeit target_accel, schreitet das Programm zu Schritt 610 weiter, durch den der Haltedruck um eine Stufe erhöht und an die Kupplung 55 angelegt wird. Wenn der angelegte Druck größer als oder gleich einem maximalen Haltedruck ist, richtet Schritt 611 das Programm auf Schritt 612, der eine Fehlermeldung auf dem Display 22 veranlaßt. Das Programm wird dann in Schritt 613 mit der nächsten Kupplung fortgesetzt. Andernfalls wird durch Schritt 614 die Kupplung 74 eingerückt, und durch Schritt 615 wird wiederholt geprüft, ob die Drehzahl des Zahnrades 68 für 500 ms Null rpm ist. Ist dies der Fall, fährt das Programm mit Schritt 616 fort, durch den die Kupplung 74 geöffnet wird.

Das Öffnen der Kupplung 74 erlaubt es für beliebige von der Kupplung 55 übertragene Drehmomente das Zahnrad 68 zu beschleunigen. Schritt 617 vergleicht wieder die gemessene Beschleunigungszeit mit der gespeicherten Referenzzeit (target_accel). Wenn die gemessene Beschleunigungszeit größer als target_accel ist, bedeutet dies, daß der an die Kupplung 55 angelegte Druck noch nicht ausreicht, um den Eingriffsvorgang der Kupplung zu initiieren. In diesem Fall wird der Druck durch Schritt 610 um eine Stufe erhöht. Die Schleife wird fortgesetzt bis die gemessene Beschleunigungszeit kleiner als die Zielbeschleunigungszeit target_accel ist, dann wird durch Schritt 618 der Haltedruck als Eichwert gespeichert. Schritt 619 wiederholt das Verfahren für die anderen in Tabelle 2 aufgelisteten Kupplungen.

Es sei bemerkt, daß mit diesem Verfahren über die Kupplung 55 lediglich ein minimales Drehmoment übertragen wird. Dies hat lediglich einen sehr geringen Einfluß auf ein Absinken der Motordrehzahl, so daß die Eichergebnisse nicht durch unterschiedliche Motorcharakteristiken beeinflußt werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten.

**Patentansprüche**

**1.** Verfahren zum Eichen von Steuerkupplungen (55, 60, 65, 69, 74, 79) eines Getriebes (12), wobei das Getriebe (12) eine mit einem Motor (10) verbundene Eingangswelle (13), eine Ausgangswelle (14) und mehrere Steuerkupplungen (55, 60, 65, 69, 74, 79) aufweist, die jede ein Drehmomente empfangendes Eingangselement (54, 59, 64, 73, 78, 87) und ein Ausgangselement (56, 61, 66, 75, 80, 88) aufweisen, mit folgenden Verfahrensschritten:

a) Bestimmung einer Profilwiderstandszeit (Tpara_d, Tpara_a) für eine Kupplungskomponente einer Steuerkupplung, die eine auf einer Reibcharakteristik des Getriebes beruhende Drehzahländerung einer Kupplungskomponente repräsentiert,

b) Berechnung einer Zieldrehzahländerungszeit (target_decel, target_accel) für die Kupplungskomponente der jeweiligen Steuerkupplung aus der Profilwiderstandszeit und

c) Gewinnen eines Kupplungseichwertes für die jeweilige Steuerkupplung aus der Zieldrehzahländerungszeit (target_decel, target_accel) und der überwachten Drehzahl einer Getriebekomponente.

2. Verfahren nach Anspruch 1, **dadurch gekennzeichnet, daß** während des Eichens die Motordrehzahl im wesentlichen konstant gehalten wird.

3. Verfahren nach Anspruch 1 oder 2, **dadurch gekennzeichnet, daß** zur Bestimmung der Profilwiderstandszeit (Tpara_d, Tpara_a) eine Kupplung geöffnet und die Zeit gemessen wird, innerhalb der sich die Drehzahl eines Zahnrades um einen bestimmten Betrag verringert bzw. erhöht.

4. Verfahren nach einem der Ansprüche 1 bis 3, **dadurch gekennzeichnet, daß** die Berechnung einer Zieldrehzahlverzögerungszeit (target_decel) anhand folgender Gleichung erfolgt:

$$\text{target\_decel} =$$

$$[\text{low\_rpm} - (\text{engine cal\_spd} - \text{x\_rpm})] /$$

$$[(-\text{Th}/\text{I}) + (\text{low\_rpm} - (\text{engine cal\_spd} - \text{x\_rpm})) /\text{Tpara\_d}],$$

wobei

- low_rpm eine untere Drehzahlansprechgrenze,
- engine cal_spd und x_rpm vorgebbare, vom Getriebetyp abhängige Einstellwerte,
- Th ein gewünschtes Haltedrehmoment der zu eichenden Kupplung,
- I die Trägheit der rotierenden Teile, die der zu eichenden Kupplung nachgeschaltet sind, und
- Tpara_d die bestimmte Profilwiderstandverzögerungszeit ist.

5. Verfahren nach einem der Ansprüche 1 bis 3, **dadurch gekennzeichnet, daß** die Berechnung einer Zieldrehzahlbeschleunigungszeit (target_accel) anhand folgender Gleichung erfolgt:

$$\text{target\_accel} =$$

$$[(\text{engine cal\_spd} - \text{x\_rpm}) - \text{low\_rpm}] /$$

$$[(\text{Th}/\text{I}) + ((\text{engine cal\_spd} - \text{x\_rpm}) - \text{low\_rpm})/\text{Tpara\_a}],$$

wobei

- low_rpm eine untere Drehzahlansprechgrenze,
- engine cal_spd und x_rpm vorgebbare, vom Getriebetyp abhängige Einstellwerte,
- Th ein gewünschtes Haltedrehmoment der zu eichenden Kupplung,
- I die Trägheit der rotierenden Teile, die der zu eichenden Kupplung nachgeschaltet sind, und
- Tpara_a die bestimmte Profilwiderstandbeschleunigungszeit ist.

6. Verfahren nach einem der Ansprüche 1 bis 5, **dadurch gekennzeichnet, daß** an die zu eichende Kupplung hydraulische Testdrucksignale angelegt werden.

7. Verfahren nach einem der Ansprüche 1 bis 6, **dadurch gekennzeichnet, daß** die Drehzahl wenigstens einer Getriebekomponente überwacht und in Abhängigkeit der Zieldrehzahländerungszeit (target_decel, target_accel) ausgewertet wird.

8. Verfahren nach Anspruch 7, **dadurch gekennzeichnet, daß** die Getriebekomponente eine innere Getriebekomponente und nicht die Getriebeeingangswelle oder die Getriebeausgangswelle ist.

9. Verfahren nach Anspruch 7 oder 8, **dadurch gekennzeichnet, daß** dann, wenn die Auswertung ein vorgebbares Kriterium erfüllt, ein dem angelegten Testdrucksignal zugeordneter Wert als Eichwert gespeichert wird.

10. Verfahren nach einem der Ansprüche 7 bis 9, **dadurch gekennzeichnet, daß** dann, wenn die Auswertung ein vorgebbares Kriterium nicht erfüllt, das Verfahren mit modifiziertem hydraulischen Testdrucksignal wiederholt wird.

**Claims**

1. A method of calibrating control clutches (55, 60, 65, 69, 74, 79) of a transmission (12), wherein the transmission (12) has an input shaft (13) connected to an engine (10), an output shaft (14) and a plurality of control clutches (55, 60, 65, 69, 74, 79), each of which has a torque-receiving input element (54, 59, 64, 73, 78, 87) and an output element (56, 61, 66, 75, 80, 88), with the following method steps:

   a) determining a profile drag time (Tpara_d, Tpara_a) for a clutch component of control clutch, which represents a change of speed of clutch component stemming from a friction characteristic of the transmission,
   b) computing a target speed change time (target_decel, target_accel) for the clutch component of the respective control clutch from the profile drag time and
   c) deriving a clutch calibration value for the respective control clutch from the target speed change time (target_decel, target_accel) and the monitored speed of rotation of a transmission component.

2. A method according to claim 1, **characterized in that** the engine speed is kept substantially constant during the calibration.

3. A method according to claim 1 or 2, **characterized in that**, in order to determine the profile drag time (Tpara_d, Tpara_a), a clutch is opened and the time within which the speed of rotation of a gearwheel reduces or increases by a specific amount is measured.

4. A method according to any of claims 1 to 3, **characterized in that** the computation of a target speed deceleration time (target_decel) is effected in accordance with the following equation:

$$\text{target\_decel} =$$

$$[\text{low\_rpm} - (\text{engine cal\_spd} - \text{x\_rpm})]/$$

$$[(-\text{Th}/\text{I}) + (\text{low\_rpm} - (\text{engine cal\_spd} - \text{x\_rpm}) / \text{Tpara\_d}],$$

   where:

   - low_rpm is a lower speed response limit,
   - engine cal_spd and x_rpm are set values which can be predetermined, in dependence on the transmission type,
   - Th is a desired hold torque of the clutch to be calibrated,
   - I is the inertia of the rotating parts which are connected downstream of the clutch to be calibrated, and
   - Tpara_d is the determined profile drag resistance delay time.

5. A method according to any of claims 1 to 3, **characterized in that** the computation of a target speed acceleration time (target_accel) is effected in accordance with the following equation:

target_accel =

[(engine cal_spd - x_rpm)l - low_rpm]/

[(Th/l) + (engine cal_spd - x_rpm) - low_rpm] /Tpara_a],

where:

- low_rpm is a lower speed response limit,
- engine cal_spd and x_rpm are set values which can be predetermined, in dependence on the transmission type,
- Th is a desired hold torque of the clutch to be calibrated,
- I is the inertia of the rotating parts which are connected downstream of the clutch to be calibrated, and
- Tpara_a is the determined profile drag resistance delay time.

6. A method according to any of claims 1 to 5, **characterized in that** hydraulic test pressure signals are applied to the clutch to be calibrated.

7. A method according to any of claims 1 to 6, **characterized in that** the speed of rotation of at least one transmission component is monitored and analysed in dependence on the target speed change time (target_decel, target_accel).

8. A method according to claim 7, **characterized in that** the transmission component is an internal transmission component and not the transmission input shaft or the transmission output shaft.

9. A method according to claim 7 or 8, **characterized in that** when the analysis fulfils a predetermined criterion, a value associated with the applied test pressure signal is stored as a calibration value.

10. A method according to any of claims 7 to 9, **characterized in that** when the analysis does not fulfil a predetermined criterion, the method is repeated with a modified hydraulic test pressure signal.


**Revendications**

1. Procédé d'étalonnage d'embrayages de commande (55, 60, 65, 69, 74, 79) d'une transmission (12), la transmission (12) comprenant un arbre d'entrée (13) relié à un moteur (10), un arbre de sortie (14) et plusieurs embrayages de commande (55, 60, 65, 69, 74, 79), dont chacun comprend un élément d'entrée recevant des couples (54, 59, 64, 73, 78, 87) et un élément de sortie (56, 61, 66, 75, 80, 88), avec les étapes de procédé suivantes :

   a) Détermination d'un temps de résistance de profil (Tpara_d, Tpara_a) pour une composante d'embrayage d'un embrayage de commande, qui représente un changement de régime de rotation d'une composante d'embrayage dû à une caractéristique de frottement de la transmission,
   b) Calcul à partir du temps de résistance de profil d'un temps de changement de régime de rotation cible (target_decel, target_accel) pour la composante d'embrayage de l'embrayage de commande respectif et
   c) Obtention d'une valeur d'étalonnage d'embrayage pour l'embrayage de commande respectif à partir du temps de changement de régime de rotation cible (target_decel, target_accel) et du régime de rotation surveillé d'une composante de transmission.

2. Procédé selon la revendication 1, **caractérisé en ce que** lors de l'étalonnage le régime de rotation du moteur est maintenu sensiblement constant.

3. Procédé selon la revendication 1 ou 2, **caractérisé en ce que** pour la détermination du temps de résistance de profil (Tpara_d, Tpara_a) on ouvre un embrayage et on mesure le temps pendant lequel le régime de rotation d'une roue dentée diminue ou augmente d'une certaine valeur.

4. Procédé selon l'une des revendications 1 à 3, **caractérisé en ce que** le calcul d'un temps de temporisation de régime de rotation cible (target_decel) a lieu à l'aide de l'équation suivante :

Target-decel =

[low_rpm - (engine cal_spd - x_rpm] /

[(-Th/l) + (low-rpm - (engine cal_spd - x_rpm))/Tpara_d]

- low_rpm étant une limite inférieure de réponse de régime de rotation
- engine cal_spd et x_rpm étant des valeurs de réglage, qui peuvent être imposées et qui dépendent du type de transmission à étalonner,
- Th étant un couple de maintien souhaité de l'embrayage à étalonner,
- I étant l'inertie des pièces en rotation, qui sont placées en aval de l'embrayage à étalonner et
- Tpara_d étant le temps de temporisation de résistance de profil déterminé.

5. Procédé selon l'une des revendications 1 à 3, **caractérisé en ce que** le calcul d'un temps d'accélération de régime de rotation cible (target_accel) a lieu à l'aide de l'équation suivante :

Target-accel =

[(engine cal_spd - x_rpm) - low_rpm]/

[(Th/l) + ((engine cal_spd - x_rpm) - low-rpm)/Tpara-a]

- low_rpm étant une limite inférieure de réponse de régime de rotation
- engine cal_spd et x_rpm étant des valeurs de réglage, qui peuvent être imposées et qui dépendent du type de transmission à étalonner,
- Th étant un couple de maintien souhaité de l'embrayage à étalonner,
- I étant l'inertie des pièces en rotation, qui sont placées en aval de l'embrayage à étalonner et
- Tpara_a étant le temps d'accélération de résistance de profil déterminé.

6. Procédé selon l'une des revendications 1 à 5, **caractérisé en ce que** des signaux de pression de test hydrauliques sont appliqués à l'embrayage à étalonner.

7. Procédé selon l'une des revendications 1 à 6, **caractérisé en ce que** le régime de rotation d'un moins une composante de transmission est surveillé et est exploité en fonction du temps de changement de régime de rotation cible (target_decel, target_accel).

8. Procédé selon la revendication 7, **caractérisé en ce que** la composante de transmission est une composante de transmission interne et non l'arbre d'entrée de la transmission ou l'arbre de sortie de la transmission.

9. Procédé selon la revendication 7 ou 8, **caractérisé en ce que**, si l'exploitation remplit un critère pouvant être prédéterminé, une valeur attribuée au signal de pression de test appliqué est mémorisée en tant que valeur d'étalonnage.

10. Procédé selon l'une des revendications 7 à 9, **caractérisé en ce que**, si l'exploitation ne remplit pas un critère pouvant être prédéterminé, le procédé est répété avec un signal de pression de test hydraulique modifié.

Fig. 1

Fig. 2

507

ist
Verzögerungszeit
<
TARGET_DECEL
?

NEIN

JA

508

Fehlermeldung
anzeigen

509

mit nächster
Kupplung
fortfahren

Fig. 4C

512

Fehlermeldung
anzeigen

513

mit nächster
Kupplung
fortfahren

517

ist
Verzögerungszeit
<
TARGET_DECEL
?

NEIN

JA

| FIG. 4A |
| FIG. 4B |
| FIG. 4C |

Fig. 3

518

Haltedruck
speichern

519

mit nächster
Kupplung
fortfahren

520

RETURN

Haltedruck/
Verzögerung

↓ ⌐495

Kupplungen 60 und
65 einrücken

496 ⌐
Drehzahl
des Zahnrades 68
für 500 ms
gehalten
?

NEIN

JA

497

Kupplung 60 öffnen

498

messe
$T\ PARA-D$

499

wiederhole
Schritte 495 - 498

*Fig. 4A*

⌐500

berechne
$TARGET\_DECEL$

*Fig. 4B*

501 Anfangsdruck an Kupplung 55 anlegen

502 Kupplungen 60 und 65 einrücken

503 Drehzahl des Zahnrades 68 für 500 ms gehalten ? — NEIN / JA

504 Kupplung 60 öffnen

505 ist Verzögerungszeit < TARGET_DECEL ? — NEIN / JA

506 wiederhole Schritte 501 - 504

516 Kupplung 60 öffnen

515 Drehzahl des Zahnrades 68 für 500 ms gehalten ? — NEIN / JA

514 Kupplung 60 einrücken

511 ist der Haltedruck > MAX ? — NEIN / JA

510 Haltedruck schrittweise erhöhen

Haltedruck/
Beschleunigung

*595*

Kupplungen 74
und 65 einrücken

*596*

Zahnraddrehzahl
= 0 für
500 ms?
?

NEIN

JA

*597*

Kupplung 74 öffnen

*598*

messe
*T PARA-A*

*599*

wiederhole
Schritte 595 - 598

*Fig. 6A*

*600*

berechne
*TARGET_ACCEL*

601
**Kupplungen 74 und 65 einrücken**

602
**Anfangsdruck an Kupplung 55 anlegen**

603
**Zahnraddrehzahl = 0 für 500 ms?** — NEIN

JA

604
**Kupplung 74 öffnen**

605
**ist Beschleunigungszeit < TARGET_ACCEL ?** — NEIN

JA

606
**wiederhole 601-604**

616
**Kupplung 74 öffnen**

JA

615
**Zahnraddrehzahl = 0 für 500 ms ?** — NEIN

614
**Kupplung 74 einrücken**

NEIN

611
**ist der Haltedruck > MAX ?** — JA

610
**Haltedruck schrittweise erhöhen**

*Fig. 6B*

607
ist
Beschleunigungszeit NEIN
<
TARGET_ACCEL
?

JA

608
Fehlermeldung
anzeigen

609
mit nächster
Kupplung
fortfahren

*Fig. 6C*

612
Fehlermeldung
anzeigen

613
mit nächster
Kupplung
fortfahren

617
ist
NEIN Beschleunigungszeit
<
TARGET_ACCEL
?

JA

618
Haltedruck
speichern

619
mit nächster
Kupplung
fortfahren

RETURN

| |
|---|
| FIG. 6A |
| FIG. 6B |
| FIG. 6C |

*Fig. 5*